(19) Europäisches Patentamt
European Patent Office
Office européen des brevets

(11) Veröffentlichungsnummer: **0 360 735**
**A1**

(12) **EUROPÄISCHE PATENTANMELDUNG**

(21) Anmeldenummer: **89810610.9**

(22) Anmeldetag: **17.08.89**

(51) Int. Cl.[5]: **D 06 P 3/10**
D 06 P 1/38, C 09 B 62/20

(30) Priorität: **26.08.88 CH 3172/88**

(43) Veröffentlichungstag der Anmeldung:
**28.03.90 Patentblatt 90/13**

(84) Benannte Vertragsstaaten:
**BE CH DE FR GB IT LI**

(71) Anmelder: **CIBA-GEIGY AG**
**Klybeckstrasse 141**
**CH-4002 Basel (CH)**

(72) Erfinder: **Lehmann, Urs, Dr.**
**Palmenstrasse 17**
**CH-4055 Basel (CH)**

**Hoegerle, Karl, Dr.**
**Conrad Ferdinand Meyer-Strasse 54**
**CH-4059 Basel (CH)**

(54) **Verfahren zum Trichromie-Färben oder -Bedrucken.**

(57) Im Verfahren zum Trichromie-Färben oder -Bedrucken von natürlichen und synthetischen Polyamidfasermaterialien zeigen Reaktivfarbstoffmischungen, die dadurch gekennzeichnet sind, dass man blaufärbende Reaktivfarbstoffe der Formel

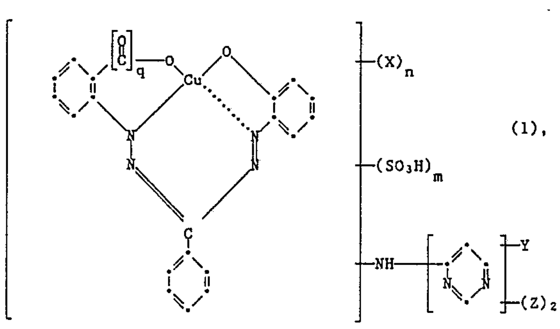

(1),

worin X Halogen, $C_1$-$C_4$-Alkyl, $C_1$-$C_4$-Alkoxy, Cyan oder Nitro, n die Zahl 0, 1 oder 2, q die Zahl 0 oder 1, m die Zahl 1, 2 oder 3, Z Halogen und Y eine CN-, CHO- oder $S(O)_pR$-Gruppe ist, wobei p die Zahl 0, 1 oder 2 und R gegebenenfalls substituiertes $C_1$-$C_8$-Alkyl oder Phenyl ist, zusammen mit sulfogruppenhaltigen gelb- oder orangefärbenden Reaktivfarbstoffen und sulfogruppenhaltigen rotfärbenden Reaktivfarbstoffen verwendet, einen gleichmässigen Farbaufbau bei gleichzeitiger Nuancenkonstanz in verschiedenen Konzentrationen und eine gute Kombinierbarkeit.

EP 0 360 735 A1

**Beschreibung**

**Verfahren zum Trichromie-Färben oder -Bedrucken**

Die vorliegende Erfindung betrifft Verfahren zum Trichromie-Färben oder -Bedrucken von natürlichen und synthetischen Polyamidfasermaterialien mit Reaktivfarbstoffmischungen.

Für das Färben und Bedrucken von textilen Fasermaterialien nach dem Trichromie-Prinzip benötigt man u.a. Farbstoffe mit möglichst gleichmässigem Farbaufbau bei gleichzeitiger Nuancenkonstanz in verschiedenen Konzentrationen und einer guten Kombinierbarkeit, um gefärbte/bedruckte textile Fasermaterialien zu erhalten, die den Anforderungen weitgehend genügen.

Mit den bisher verwendeten Farbstoffen/Farbstoffmischungen war dieses Ziel nicht immer zu erreichen, insbesondere bezüglich Kombinierbarkeit, Zieh- und Fixiergeschwindigkeit, Ziehgrad, Faser- und Flächenegalität sowie Nassechtheit, und es war deshalb die Aufgabe der vorliegenden Erfindung, verbesserte Verfahren zum Färben und Bedrucken von textilen Polyamidfasermaterialien nach dem Trichromie-Prinzip bereitzustellen.

Es wurde nun gefunden, dass man die gestellte Aufgabe erfindungsgemäss lösen kann, wenn man die Verfahren mit Mischungen von bestimmten Reaktivfarbstoffen ausführt.

Gegenstand der vorliegenden Erfindung ist somit ein Verfahren zum Trichromie-Färben oder -Bedrucken von natürlichen und synthetischen Polyamidfasermaterialien mit Reaktivfarbstoffmischungen, welches dadurch gekennzeichnet ist, dass man blaufärbende Reaktivfarbstoffe der Formel

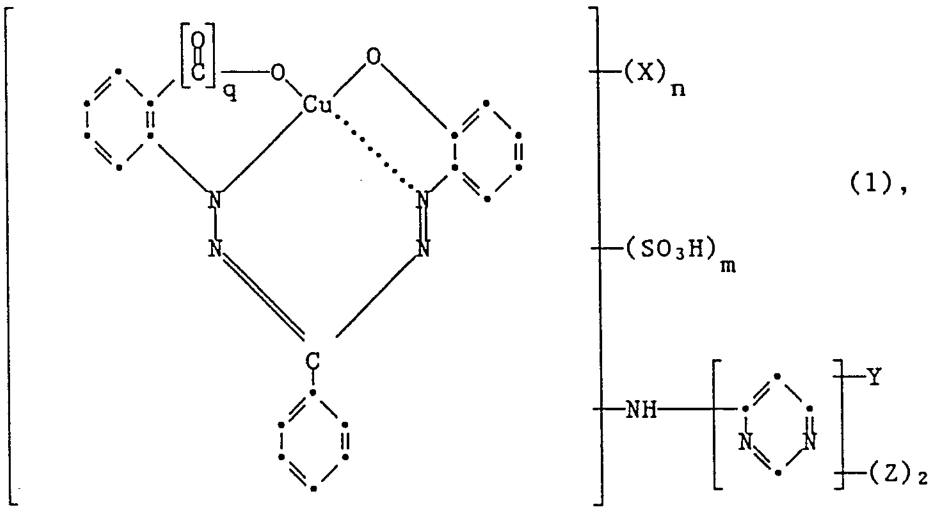

(1),

worin X Halogen, $C_1$-$C_4$-Alkyl, $C_1$-$C_4$-Alkoxy, Cyan oder Nitro, n die Zahl 0, 1 oder 2, q die Zahl 0 oder 1, m die Zahl 1, 2 oder 3, Z Halogen und Y eine CN-, CHO- oder $S(O)_pR$-Gruppe ist, wobei p die Zahl 0, 1 oder 2 und R gegebenenfalls substituiertes $C_1$-$C_8$-Alkyl oder Phenyl ist, zusammen mit sulfogruppenhaltigen gelb- oder orangefärbenden Reaktivfarbstoffen und sulfogruppenhaltigen rotfärbenden Reaktivfarbstoffen verwendet.

Als Halogen kommt für X in Formel (1) z.B. Fluor, Brom oder vorzugsweise Chlor in Betracht.

Als Halogen kommt für Z in Formel (1) Brom oder vorzugsweise Fluor oder Chlor in Betracht.

Als $C_1$-$C_4$-Alkyl kommt für X in Formel (1) z.B. in Betracht: Methyl, Aethyl, Propyl, Isopropyl, Butyl, tert.-Butyl, Isobutyl oder sek.-Butyl.

Als $C_1$-$C_4$-Alkoxy kommt für X in Formel (1) z.B. in Betracht: Methoxy, Aethoxy, Propoxy, Isopropoxy, Butoxy, sek.-Butoxy oder tert.-Butoxy.

Für Y kommt in Formel (1) vorzugsweise $-S(O)_pR$ in Betracht, wobei p die Zahl 0, 1 oder 2 und R gegebenenfalls substituiertes $C_1$-$C_8$-Alkyl oder Phenyl ist.

Als $C_1$-$C_8$-Alkyl kommt für R insbesondere $C_1$-$C_4$-Alkyl wie z.B. Methyl, Aethyl, Propyl, Isopropyl, Butyl, tert.-Butyl, Isobutyl, sek.-Butyl, sowie die entsprechenden Reste, die z.B. durch Halogen, wie z.B. Fluor, Chlor oder Brom, oder Phenyl substituiert sind, in Betracht.

Für n kommt in Formel (1) insbesondere die Zahl 0 in Betracht.

Für q kommt in Formel (1) vorzugsweise die Zahl 1 in Betracht.

Für m kommt in Formel (1) vorzugsweise die Zahl 2 in Betracht.

Von Interesse für das erfindungsgemässe Verfahren sind blaufärbende Reaktivfarbstoffe der Formel (1), worin X Halogen und R gegebenenfalls substituiertes $C_1$-$C_8$-Alkyl ist.

Von besonderem Interesse für das erfindungsgemässe Verfahren sind blaufärbende Reaktivfarbstoffe der Formel (1), worin q die Zahl 1, m die Zahl 2 und n die Zahl 0 ist.

Für das erfindungsgemässe Verfahren sind blaufärbende Reaktivfarbstoffe der Formel (1), in denen X Chlor, n die Zahl 1, q die Zahl 1, m die Zahl 2, Z Fluor oder Chlor und Y $-S(O)_pR$ ist, bevorzugt, wobei insbesondere solche Reaktivfarbstoffe der Formel (1) in Frage kommen, in denen n die Zahl 0, q die Zahl 1, m die Zahl 2, Z Fluor oder Chlor und Y $-S(O)_pR$ ist, worin p die Zahl 0, 1 oder 2 und R $C_1$-$C_4$-Alkyl bedeutet.

Besonders bevorzugt sind für das erfindungsgemässe Verfahren blaufärbende Reaktivfarbstoffe der Formel

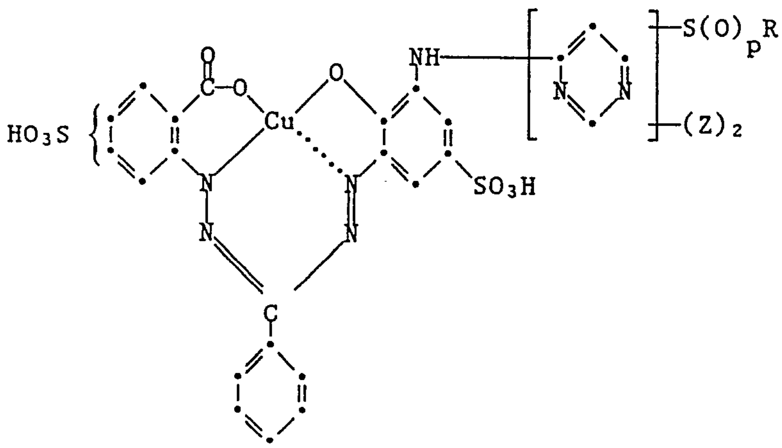

(2),

worin Z Fluor oder Chlor, p die Zahl 0 oder 2 und R $C_1$-$C_4$-Alkyl ist.

Ganz besonders bevorzugt sind für das erfindungsgemässe Verfahren blaufärbende Reaktivfarbstoffe der Formel

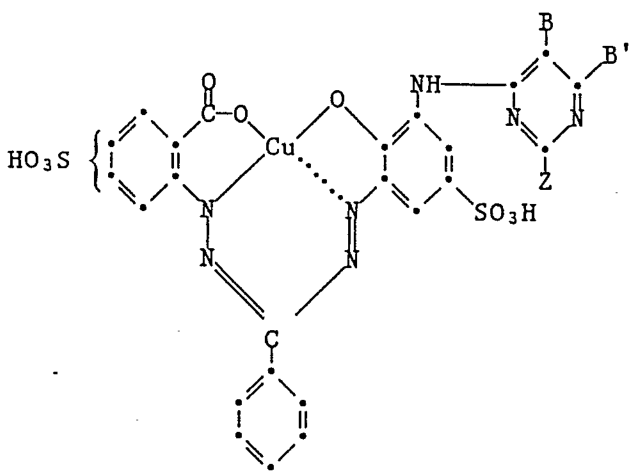

(3),

worin einer der Reste B oder B′ $-S(O)_pCH_3$ ist und der andere der Reste B oder B′ Fluor oder Chlor, Z Fluor oder Chlor und p die Zahl 0 oder 2 ist. Hierbei sind B und Z oder B′ und Z jeweils Chlor oder Fluor.

Ganz besonders wichtig sind blaufärbende Reaktivfarbstoffe der Formeln

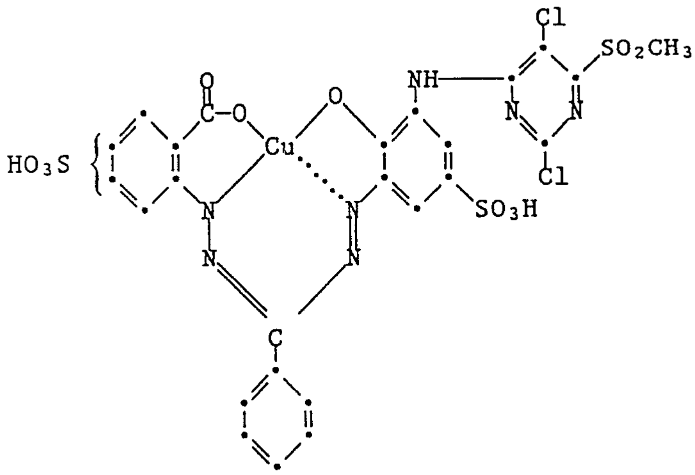

(4)

und

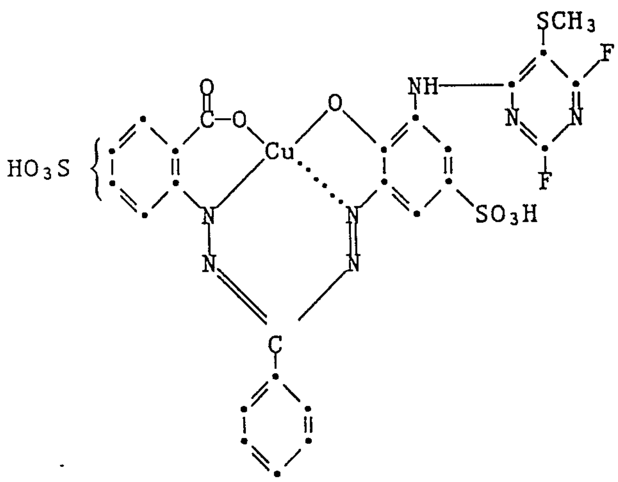

(5)

In dem erfindungsgemässen Verfahren werden als gelb- oder orange- und rotfärbende sulfogruppenhaltige Reaktivfarbstoffe vorzugsweise Azofarbstoffe verwendet.

Insbesondere werden gelb- oder orange- und rotfärbende sulfogruppenhaltige Reaktivfarbstoffe, vorzugsweise Azofarbstoffe, verwendet, die als faserreaktive Gruppe eine Halogentriazin- oder Halogenpyrimidingruppe oder eine Reaktivgruppe der aliphatischen Reihe enthalten.

Als Halogenpyrimidingruppe werden vorzugsweise Difluorchlorpyrimidinyl, insbesondere 2,4-Difluor-5-chlorpyrimidin-6-yl, und als Reaktivgruppe der aliphatischen Reihe α,β-Dihalogenpropionyl, insbesondere α,β-Dibrompropionyl, oder α-Halogenacryloyl, insbesondere α-Bromacryloyl, verwendet.

Für das erfindungsgemässe Verfahren kommen z.B. die folgenden gelb- oder orangefärbenden, sulfogruppenhaltigen, faserreaktiven Farbstoffe in Betracht:

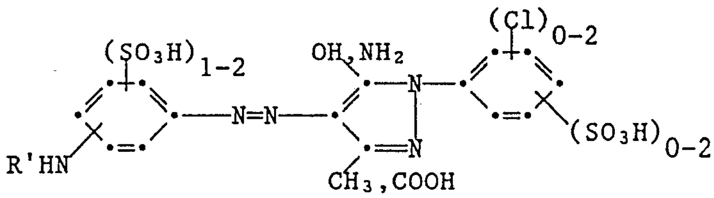

(6)

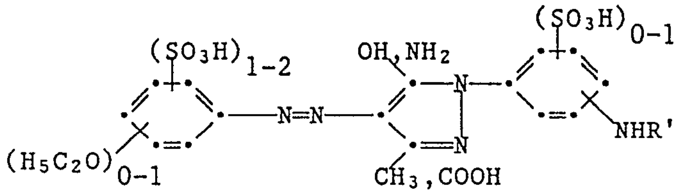

(7)

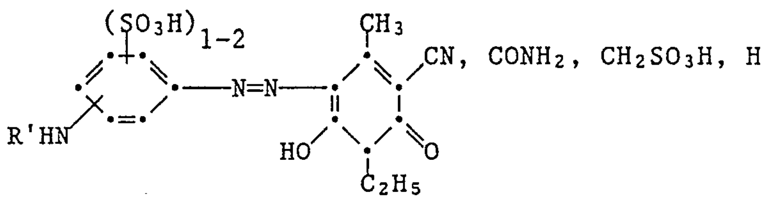

(8)

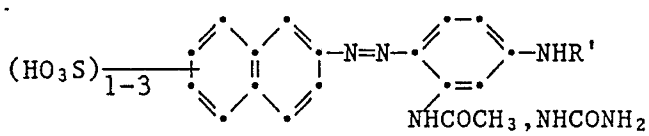

(9)

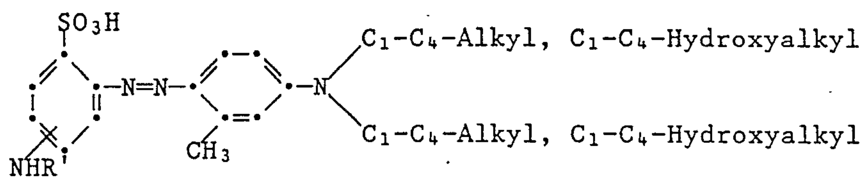

(10)

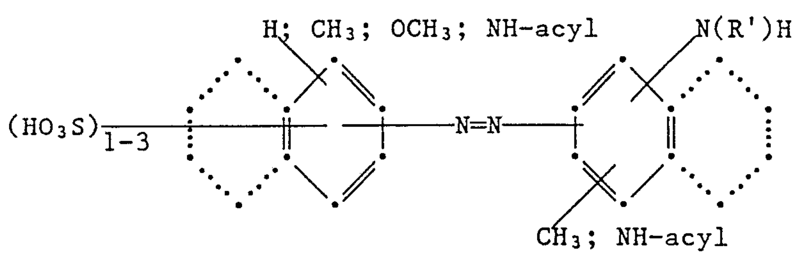

(11)

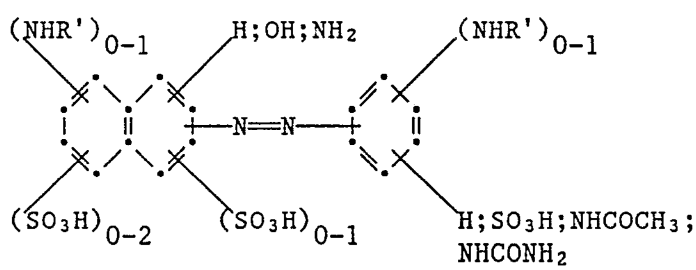

(12)

Für das erfindungsgemässe Verfahren kommen ferner z.B. die folgenden rotfärbenden sulfogruppenhaltigen Reaktivfarbstoffe in Betracht:

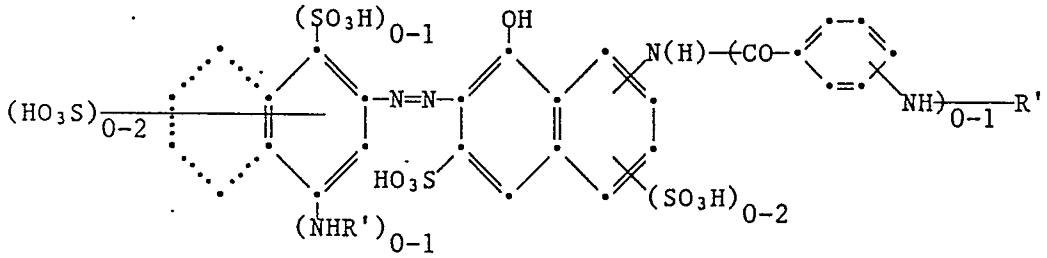 (13),

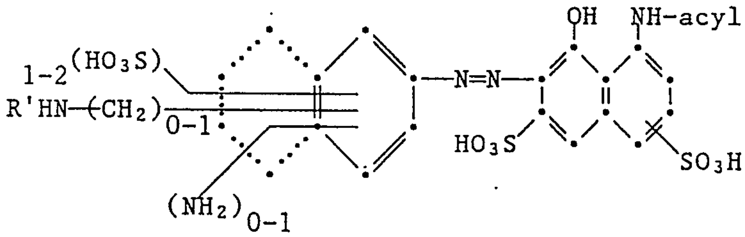 (14),

worin acyl z.B. Acetyl oder gegebenenfalls substituiertes Benzoyl ist und die durch Punkte angedeuteten kondensierten Ringe für alternativ mögliche Naphthalinsysteme stehen, und

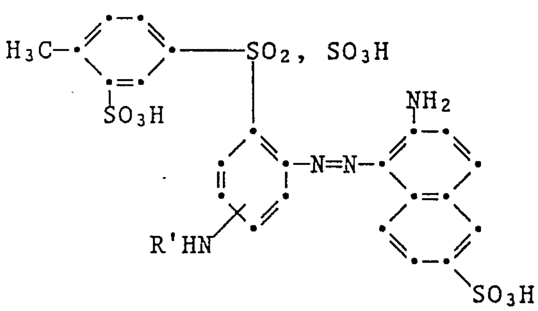 (15) 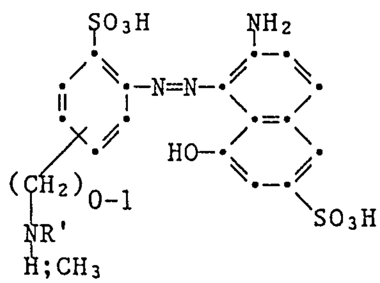 (16).

In den vorstehenden Formeln (6) bis (16) ist R′ eine faserreaktive Gruppe und bedeutet Difluorchlorpyrimidinyl, insbesondere 2,4-Difluor-5-chlorpyrimidin-6-yl, oder α,β-Dihalogenpropionyl, insbesondere α,β-Dibrompropionyl, oder α-Halogenacryloyl, insbesondere α-Bromacryloyl.

Von besonderem Interesse sind die gelb- oder orangefärbenden Farbstoffe der Formeln (6) bis (11) sowie die rotfärbenden Farbstoffe der Formeln (13) bis (16), wobei in Formel (16) die faserreaktive Gruppe R′ als $-(CH_2)_{0-1}NHR'$-Gruppe an den Chromophor gebunden ist.

Als besonders bevorzugte gelb- oder orangefärbende Reaktivfarbstoffe kommen für das erfindungsgemässe Verfahren

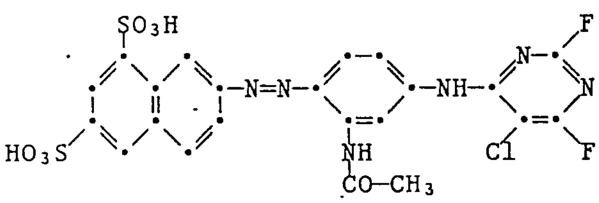 (17)

und insbesondere

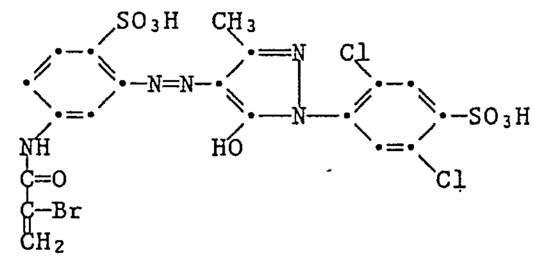

(18)

in Betracht.

Als besonders bevorzugte rotfärbende Reaktivfarbstoffe kommen für das erfindungsgemässe Verfahren

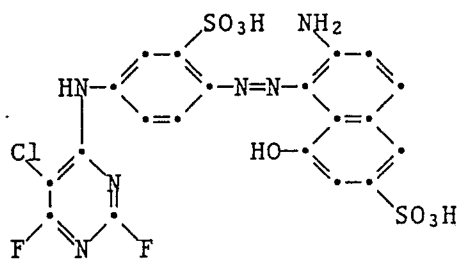

(19)

und insbesondere

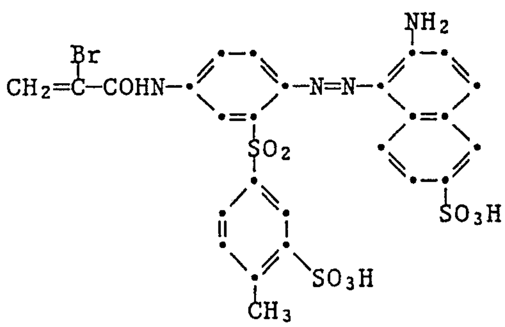

(20)

in Betracht.

Für das erfindungsgemässe Verfahren zum Trichromie-Färben oder -Bedrucken von natürlichen und synthetischen Polyamidfasermaterialien ist die Verwendung des gelb- oder orangefärbenden Reaktivfarbstoffes der Formel (18) zusammen mit dem rotfärbenden Reaktivfarbstoff der Formel (20) und mindestens einem blaufärbenden Reaktivfarbstoff der Formel (1) besonders bevorzugt.

Für das erfindungsgemässe Verfahren ganz besonders bevorzugte Ausführungsformen sind dadurch gekennzeichnet, dass man

a) einen gelb- oder orangefärbenden Reaktivfarbstoff der Formel (18) zusammen mit einem rotfärbenden Reaktivfarbstoff der Formel (20) und einem blaufärbenden Reaktivfarbstoff der Formel (4) verwendet;

b) einen gelb- oder orangefärbenden Reaktivfarbstoff der Formel (18) zusammen mit einem rotfärbenden Reaktivfarbstoff der Formel (20) und einem blaufärbenden Reaktivfarbstoff der Formel (5) verwendet.

Die für das erfindungsgemässe Verfahren zum Trichromie-Färben oder -Bedrucken verwendeten gelb- oder orange- und rotfärbenden Reaktivfarbstoffe sind an sich bekannt und können in Analogie zu bekannten Farbstoffen hergestellt werden.

Die Reaktivfarbstoffe liegen entweder in der Form ihrer freien Sulfonsäure oder als deren Salze vor.

Als Salze kommen beispielsweise Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die Reaktivfarbstoffe der Formel (1) können durch ein Verfahren hergestellt werden, welches dadurch gekennzeichnet ist, dass man eine Verbindung der Formel

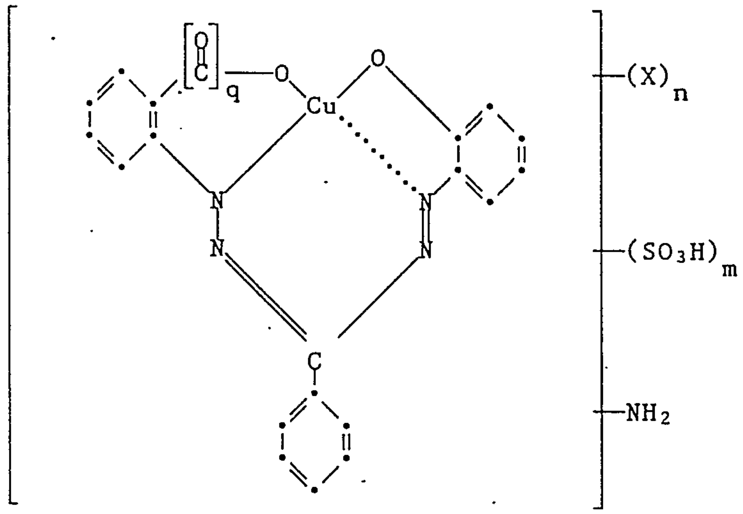

(21),

worin q, X, n und m die unter Formel (1) angegebenen Bedeutungen haben, mit einer den Rest der Formel

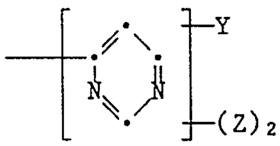

(22),

worin Y und Z die unter Formel (1) angegebenen Bedeutungen haben, einführenden Verbindung umsetzt.

Als den Rest der Formel (22) einführende Verbindungen kommen Verbindungen der Formel

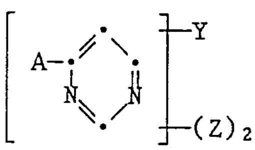

(23),

worin A Halogen, vorzugsweise Fluor oder Chlor, Z Halogen, insbesondere Fluor oder Chlor, und Y eine CN-, CHO- oder vorzugsweise eine $S(O)_pR$-Gruppe ist, worin p die Zahl 0, 1 oder 2 und R gegebenenfalls substituiertes $C_1$-$C_8$-Alkyl, vorzugsweise $C_1$-$C_4$-Alkyl, oder Phenyl ist, in Betracht.

Als Beispiele für Verbindungen der Formel (22) seien

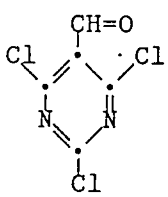 , 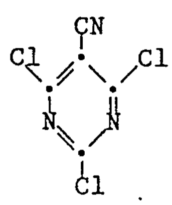 , 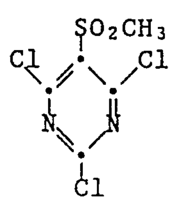 , 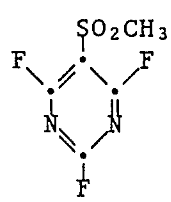 ,

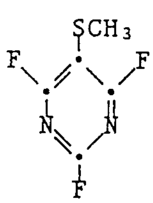 , 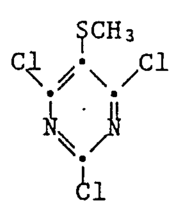 , 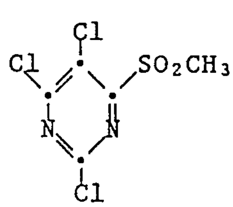 , 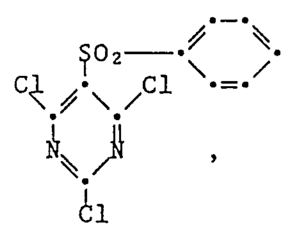 ,

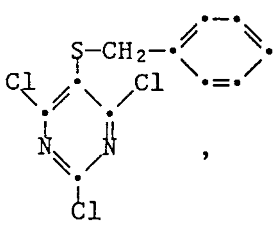 , 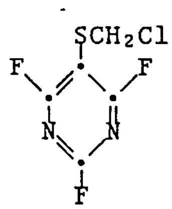 genannt.

Die Verbindungen der Formel (21) sind an sich bekannt und können in Analogie zu bekannten Verbindungen hergestellt werden.

Die Verbindungen der Formel (23) sind zum Teil bekannt und können in Analogie zu bekannten Verbindungen hergestellt werden.

Verbindungen der Formel (23), worin A und Z Halogen, Y eine SR-Gruppe und R durch Halogen oder Phenyl substituiertes $C_1$-$C_8$-Alkyl ist, können z.B. durch Umsetzung von Barbitursäure mit einer Verbindung der Formel

$(R'')_2SO$ (24),

worin R″ gegebenenfalls durch Halogen oder Phenyl substituiertes $C_1$-$C_8$-Alkyl ist, in Gegenwart von Essigsäureanhydrid und anschliessender Umsetzung des Reaktionsprodukts mit Halogenverbindungen des Phosphors in Gegenwart eines Katalysators bei einer Temperatur von 80 bis 180°C erhalten werden.

Falls R″ unsubstituiertes $C_1$-$C_8$-Alkyl ist, kann anschliessend eine Halogenierung des Restes R″ durchgeführt werden. Weiterhin kann am Pyrimidinring gebundenes, von Fluor verschiedenes, Halogen gegen Fluor ausgetauscht werden.

Beispiele für Verbindungen der Formel (24) sind Dimethyl-, Diäthyl-, Dipropyl-, Diisopropyl-, Dibutyl-, Di-tert.-butyl-, Di-sek.-butyl-, Diisobutyl-, Dibenzyl- oder Diphenäthylsulfoxid.

Die Umsetzung von Barbitursäure mit Verbindungen der Formel (24) in Gegenwart von Essigsäureanhydrid erfolgt vorzugsweise in organischen Lösungsmitteln, wie z.B. Acetonitril, bei Temperaturen von z.B. 60 bis 120°C.

Als Halogenverbindungen des Phosphors kommen z.B. Phosphorpentachlorid, -trichlorid oder insbesondere Phosphoroxychlorid in Betracht. Die Umsetzung mit Halogenverbindungen des Phosphors erfolgt vorzugsweise bei Temperaturen zwischen 100 und 130°C. Als Katalysatoren kommen z.B. Pyridin, Triäthylamin, Tripropylamin, Diäthylanilin oder insbesondere Dimethylanilin in Betracht.

Für die Halogenierung des Restes R″, der die oben angegebene Bedeutung hat, kommt z.B. eine Chlorierung in Betracht, die mit Chlorierungsmitteln, wie z.B. Chlorgas, in organischen Lösungsmitteln, wie z.B. Tetrachlorkohlenstoff, bei niedrigen Temperaturen, z.B. -40 bis +5°C, durchgeführt wird.

Der Austausch am Pyrimidinring gebundenen Halogens gegen Fluor erfolgt mit Fluorierungsmitteln, wie z.B. Fluorwasserstoff, Natriumfluorid, Kaliumfluorid oder vorzugsweise einem Kaliumfluorid-Calciumfluorid Gemisch, dessen Verhältnis insbesondere 1:1 ist, in organischen Lösungsmitteln, wie z.B. Sulfolan oder vorzugsweise Acetonitril, bei Temperaturen von z.B. 50 bis 100°C.

Die Kondensation des Chromophors der Formel (21) mit der den Rest der Formel (22) einführenden Verbindung erfolgt vorzugsweise in wässriger Lösung, Emulsion oder Suspension, bei niedriger Temperatur, z.B. 0 bis 40°C, und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert.

Die Reaktivfarbstoffe der Formel (1) zeichnen sich durch gute Faser- und Flächenegalität und allgemein hohes Echtheitsniveau aus.

Für das erfindungsgemässe Verfahren können die Mengen, in denen die Reaktivfarbstoffe der Formel (1) und die gelb- bzw. orange- und rotfärbenden Reaktivfarbstoffe in den Färbebädern oder Druckpasten verwendet werden, je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

Vorzugsweise wird für das erfindungsgemässe Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druckapparate und -maschinen, beispielsweise für Flocke, Kammzug, Stranggarn, Wickelkörper, Stückware und Teppiche verwendet werden.

Die wässrigen Färbebäder können neben dem Reaktivfarbstoff noch übliche Hilfsmittel, insbesondere Egalisierhilfsmittel, enthalten. Die Egalisierhilfsmittel werden in einer Menge von 0,3 bis 3 Gewichtsprozent, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zwecksmässig niedere, aliphatische Carbonsäuren, wie Ameisensäure, Essigsäure oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat, als Hilfsmittel enthalten.

Das Flottenverhältnis kann innerhalb eines weiten Bereichs gewählt werden, z.B. von 1:6 bis 1:80, vorzugsweise 1:10 bis 1:50.

Das Färben erfolgt aus wässriger Flotte nach dem Ausziehverfahren z.B. bei einer Temperatur zwischen 80 und 105°C, bzw. zwischen 80 und 110°C bei Verwendung eines Formaldehyd-abspaltenden Wollschutzmittels, vorzugsweise zwischen 98° und 103°C.

Die Färbedauer beträgt in der Regel 30 bis 90 Minuten.

Die Fixierung der Farbstoffe auf dem Fasermaterial erfolgt nach an sich bekannten Methoden.

Eine besonders bevorzugte Ausführungsform des erfindungsgemässen Verfahrens ist dadurch gekennzeichnet, dass man nach dem Färben bei vorzugsweise 98 bis 103°C die Färbeflotte auf ca. 75° bis 90°C abkühlen lässt und den pH-Wert auf 8 bis 9, vorzugsweise auf ca. 8,5, einstellt. Die Einstellung des pH-Wertes kann mit üblichen Mitteln erfolgen, z.B. Alkalihydroxidlösungen sowie insbesondere mit wässriger Ammoniaklösung üblicher Konzentration, z.B. 25 Gewichtsprozent Ammoniak enthaltend.

Das erfindungsgemässe Verfahren zum Trichromie-Färben oder -Bedrucken zeichnet sich durch gute Faser- und Flächenegalität und gute Nassechtheiten der erhaltenen Färbungen bzw. Drucke aus. Die für das erfindungsgemässe Verfahren eingesetzten Reaktivfarbstoffmischungen zeichnen sich durch hohen und gleichmässigen Ausziehgrad, gute Kombinierbarkeit sowie gleichmässige Zieh- und Fixiergeschwindigkeit der Farbstoff-Komponenten aus.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Herstellungsvorschriften

Beispiel 1:

9,18 Teile 2,4,6-Trichlor-5-methylthiopyrimidin werden in 60 Teilen trockenem Tetrachlorkohlenstoff gelöst und in diese Lösung bei -20° innerhalb von 2 Stunden 7,2 Teile Chlorgas eingeleitet. Anschliessend wird die Lösung auf 45° erwärmt, 2 Stunden bei dieser Temperatur gehalten, dann mit Inertgas gespült und destilliert. Man erhält 10,1 Teile der Verbindung der Formel

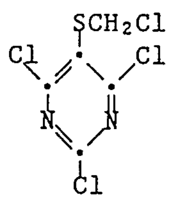

(101)

Beispiel 2:

57 Teile getrocknetes Acetonitril werden vorgelegt. Hierzu werden 46 Teile eines bei 150° am Hochvakuum getrockneten Kaliumfluorid-Calciumfluorid 1:1-Gemisches und 5,02 Teile der gemäss Beispiel 1 hergestellten Verbindung gegeben.

Die Suspension wird unter Rühren 28 Stunden am Rückfluss erhitzt, anschliessend auf Raumtemperatur abgekühlt, filtriert, mit trockenem Acetonitril gewaschen und destilliert. Man erhält 2,28 Teile der Verbindung der Formel

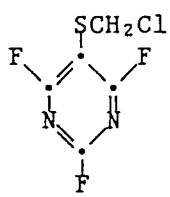

(102)

Beispiel 3:

60 Teile Essigsäure (98-100 %) und 18,9 Teile Essigsäureanhydrid werden vorgelegt. In diese Lösung werden dann 17,42 Teile getrocknete Barbitursäure eingetragen und zu der erhaltenen Suspension 40,76 Teile Dibenzylsulfoxid rasch zugegossen.

Die Suspension wird innerhalb von 2 Stunden auf 90° erwärmt und 4 Stunden bei 90 bis 100° gehalten. Der erhaltene Niederschlag wird bei Raumtemperatur abfiltriert, mit 50 Teilen Wasser, anschliessend mit 40 Teilen Aceton gewaschen und dann im Vakuum bei 40° getrocknet. Man erhält 38,5 Teile eines Zwischenproduktes. 90 Teile Phosphoroxichlorid werden vorgelegt und 6,94 Teile N,N-Dimethylanilin zugetropft. In diese Lösung werden 38,5 Teile des nach obiger Vorschrift erhaltenen Zwischenproduktes eingetragen. Anschliessend wird die Suspension aufgeheizt und 17 Stunden am Rückfluss erhitzt. Nach Abkühlung auf Raumtemperatur wird das überschüssige Phosphoroxichlorid abdestilliert, der dickflüssige Rückstand auf 60 Teile Wasser gegossen und die Temperatur der Suspension bei 25 bis 30° gehalten.

Anschliessend wird die Suspension mit Chloroform extrahiert, das Chloroform abgetrennt und das

Reaktionsprodukt im Hochvakuum destilliert. Man erhält 24,58 Teile der Verbindung der Formel

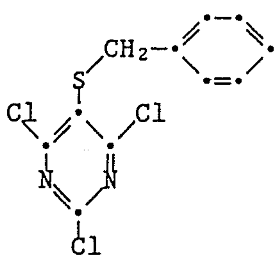

(103)

Beispiel 4:

Verfährt man wie in Beispiel 2 angegeben, verwendet jedoch statt 5,02 Teilen der Verbindung der Formel (101) eine äquimolare Menge der Verbindung der Formel (103), so erhält man die Verbindung der Formel

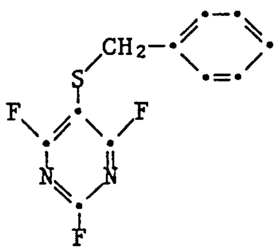

(104)

Beispiel 5:

6,62 Teile des Chromophors der Formel

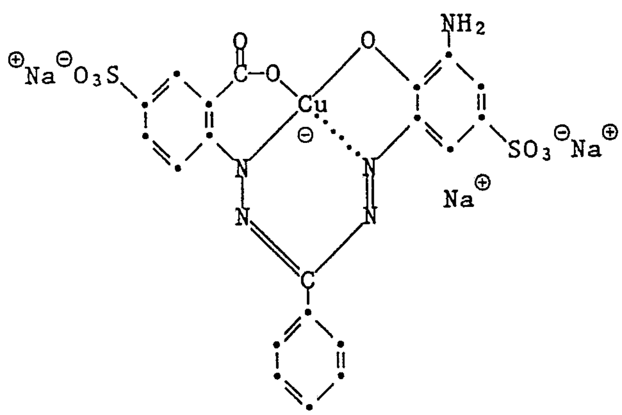

(105)

werden in 50 Teile Wasser eingetragen. Durch Zusatz von Salzsäure wird ein pH-Wert von 7 eingestellt.

Anschliessend werden 2,75 Teile der Verbindung der Formel

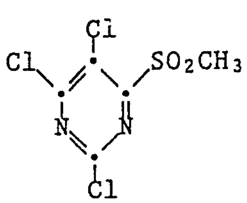

(106),

gelöst in 40 Teilen Aceton, zugegeben. Der pH-Wert wird durch Zugabe von wässriger Natriumhydroxid-Lösung auf einem Wert von 7 bis 7,5 gehalten. Anschliessend wird 8 Stunden bei 40° und einem pH-Wert von 7 bis 7,5 gerührt, die Reaktionslösung filtriert und mit Natriumchlorid versetzt. Der ausgefallene Farbstoff wird abfiltriert, mit Natriumchlorid-Lösung gewaschen und bei 60 bis 70° getrocknet.

Man erhält 8,6 Teile eines Farbstoffes, der der Formel

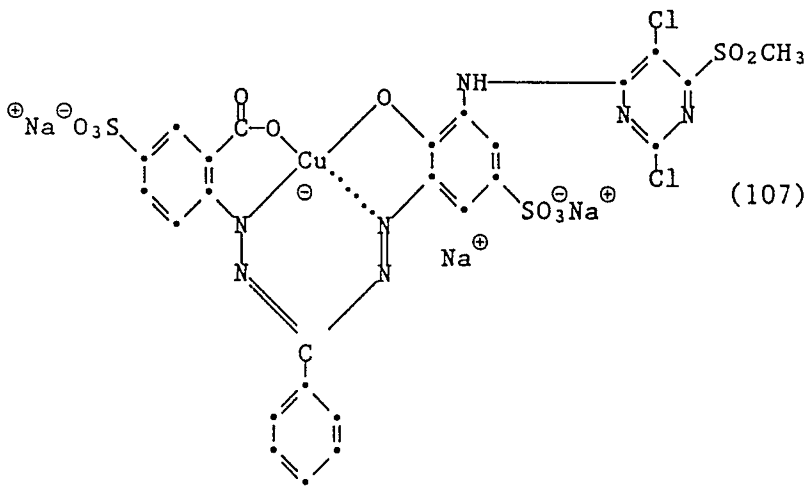

(107)

entspricht. Der erhaltene Farbstoff färbt Wolle in echten blauen Farbtönen.

Beispiel 6:

Verfährt man wie in Beispiel 5 angegeben, verwendet aber statt 2,75 Teilen der Verbindung der Formel (106) 2,4 Teile der Verbindung der Formel

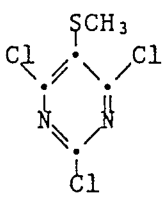

(108),

erhält man 10,8 Teile eines Farbstoffes, der der Formel

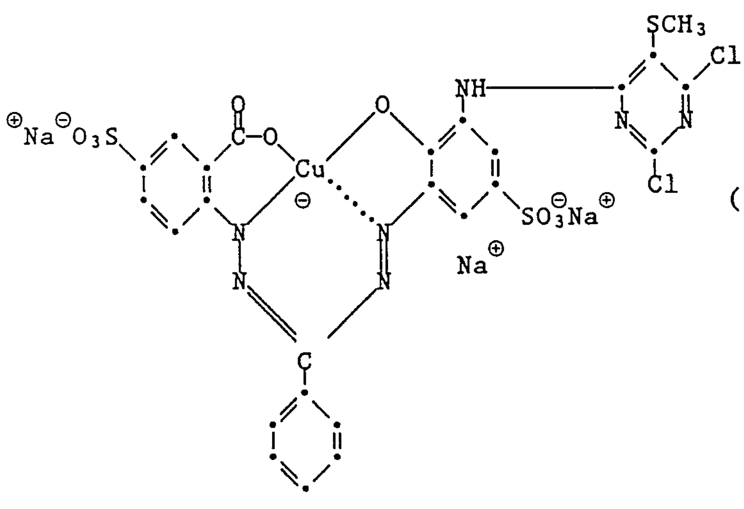

(109)

entspricht. Der erhaltene Farbstoff färbt Wolle in echten blauen Farbtönen.

Beispiel 7:

6,62 Teile des Chromophors der Formel (105) aus Beispiel 5 werden in 50 Teile Wasser eingetragen. Durch Zusatz von Salzsäure wird ein pH-Wert von 7 eingestellt.

Anschliessend werden bei 0 bis 5° 2,1 Teile der Verbindung der Formel

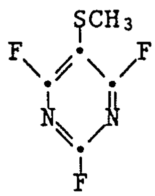

(110),

gelöst in 15 Teilen Aceton, innerhalb von 3 Minuten zugegeben. Der pH-Wert wird durch Zugabe von Natriumhydroxid-Lösung auf einem Wert von 6 bis 7 gehalten. Die Temperatur wird langsam bis Raumtemperatur erhöht, wobei der pH-Wert auf einem Wert von 6 bis 7 gehalten wird.

Anschliessend wird die Reaktionslösung mit Natriumchlorid versetzt, der ausgefallene Farbstoff abfiltriert und bei 60 bis 70° getrocknet.

Man erhält 9,5 Teile eines Farbstoffes, der der Formel

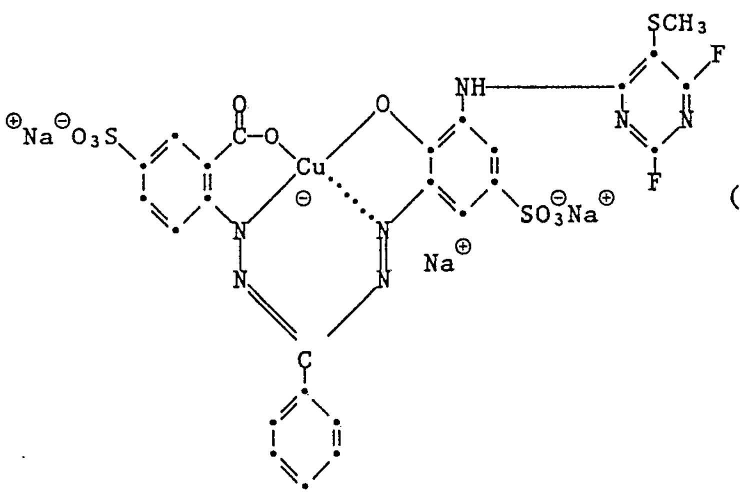

(111)

entspricht. Der erhaltene Farbstoff färbt Wolle in echten blauen Farbtönen.

Beispiele 8 bis 14:

Verfährt man wie in Beispiel 7 angegeben, verwendet aber statt 2,1 Teilen der Verbindung der Formel (110) eine äquimolare Menge der in der folgenden Tabelle 1 in Spalte 2 angegebenen Verbindungen, so erhält man die in Spalte 3 angegebenen Farbstoffe, worin FA den Rest der Formel

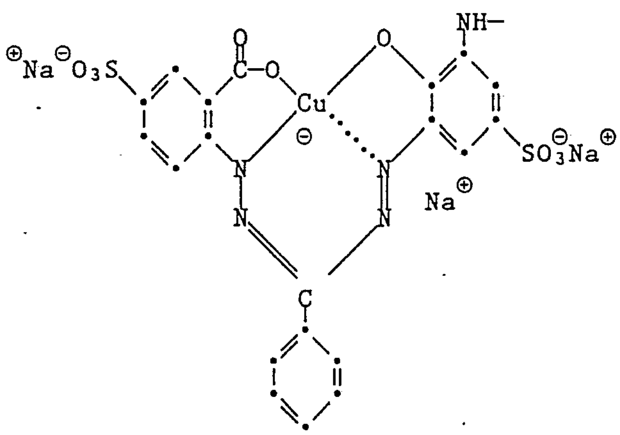

(112)

bedeutet. Die in Tabelle 1 in Spalte 3 angegebenen Farbstoffe färben Wolle in den in Tabelle 1 in Spalte 4 aufgeführten Farbtönen.

Tabelle 1

| Bsp. | Pyrimidinverbindung | Farbstoff | Nuance auf Wolle |
|---|---|---|---|
| 8 | 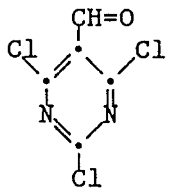 | 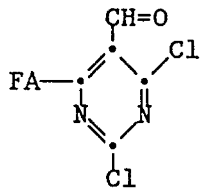 (113) | blau |
| 9 | 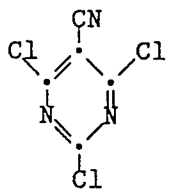 | 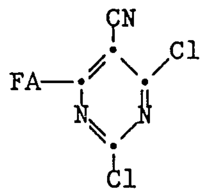 (114) | blau |
| 10 | 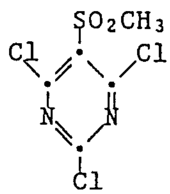 | 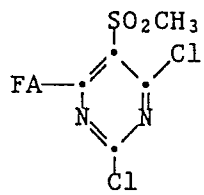 (115) | blau |
| 11 | 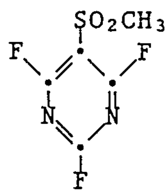 | 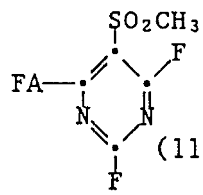 (116) | blau |
| 12 | 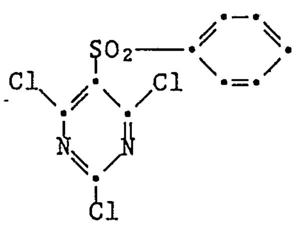 | 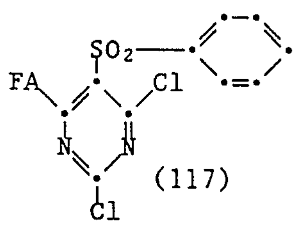 (117) | blau |

Tabelle 1 (Fortsetzung)

| Bsp. | Pyrimidinverbindung | Farbstoff | Nuance auf Wolle |
|---|---|---|---|
| 13 | 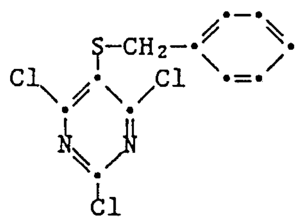 | 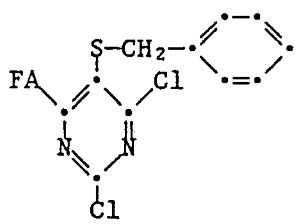 (118) | blau |
| 14 | 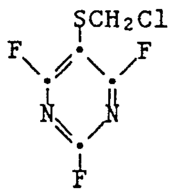 | 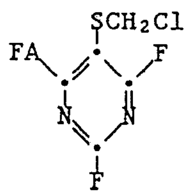 (119) | blau |

Beispiele 15 und 16:

Verfährt man wie in den Beispielen 5 und 6 angegeben, verwendet aber statt 6,62 Teilen eines Chromophors der Formel (105) 6,62 Teile eines Chromophors der Formel

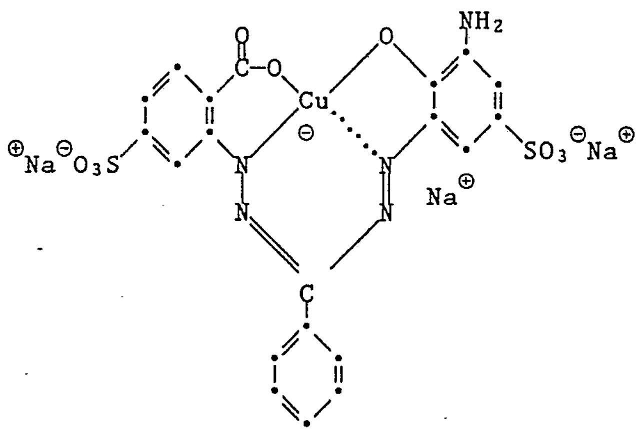 (120),

so erhält man die in Tabelle 2 in Spalte 3 angegebenen Farbstoffe, worin FA′ ein Rest der Formel

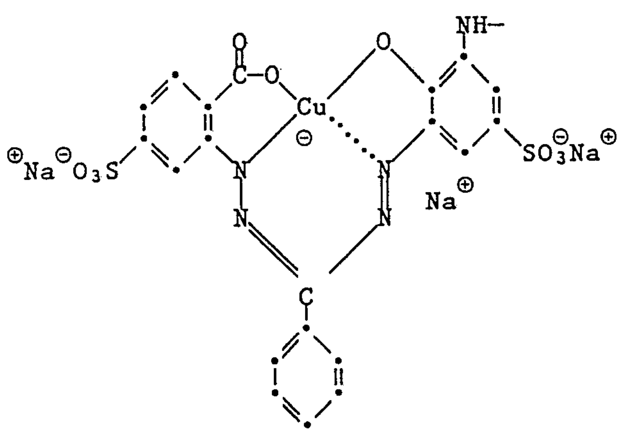 (121),

ist. Die erhaltenen Farbstoffe färben Wolle in den in Tabelle 2 in Spalte 4 angegebenen Farbtönen.

Tabelle 2

| Bsp. | Pyrimidinverbindung | Farbstoff | Nuance auf Wolle |
|---|---|---|---|
| 15 | 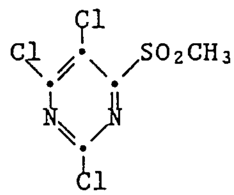 | 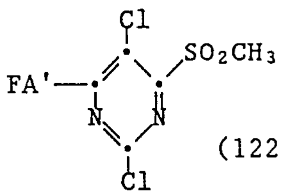 (122) | blau |
| 16 | 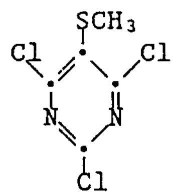 | 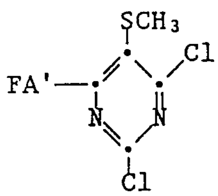 (123) | blau |

Beispiele 17 bis 24:

Verfährt man wie in den Beispielen 7 bis 14 angegeben, verwendet aber statt 6,62 Teilen eines Chromophors der Formel (105) 6,62 Teile eines Chromophors der Formel (120) aus den Beispielen 15 und 16, so erhält man die in Tabelle 3 in Spalte 3 angegebenen Farbstoffe, worin FA′ ein Rest der Formel (121) ist. Die erhaltenen Farbstoffe färben Wolle in den in Tabelle 3 in Spalte 4 angegebenen Farbtönen.

Tabelle 3

| Bsp. | Pyrimidinverbindung | Farbstoff | Nuance auf Wolle |
|---|---|---|---|
| 17 | 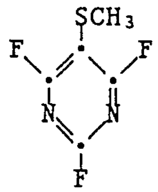 | 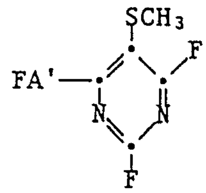 (124) | blau |
| 18 | 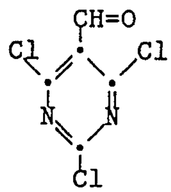 | 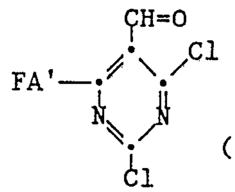 (125) | blau |
| 19 | 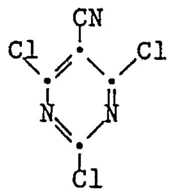 | 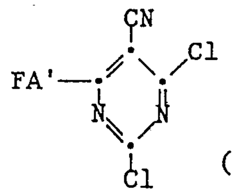 (126) | blau |
| 20 | 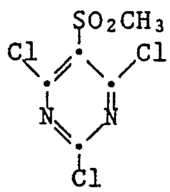 | 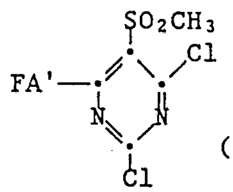 (127) | blau |
| 21 | 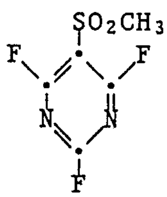 | 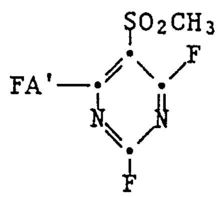 (128) | blau |
| 22 | 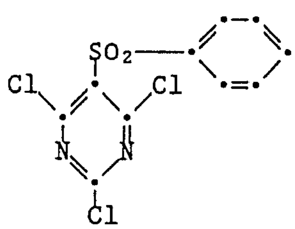 | 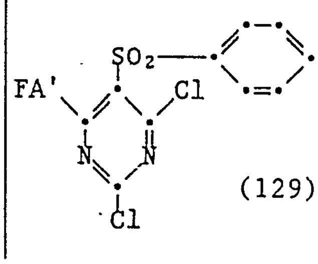 (129) | blau |

Tabelle 3 (Fortsetzung)

| Bsp. | Pyrimidinverbindung | Farbstoff | Nuance auf Wolle |
|---|---|---|---|
| 23 | 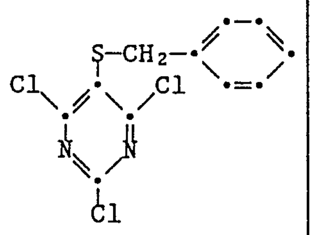 | 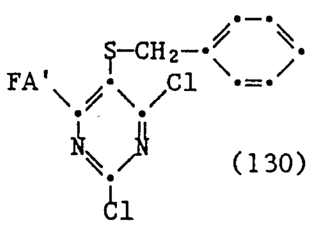 (130) | blau |
| 24 | 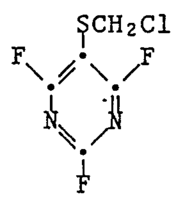 | 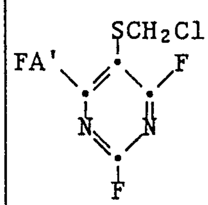 (131) | blau |

Färbebeispiel 1

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,35 Teile des gemäss Beispiel 5 erhaltenen Farbstoffes und 0,30 Teile des gelben Farbstoffes der Formel

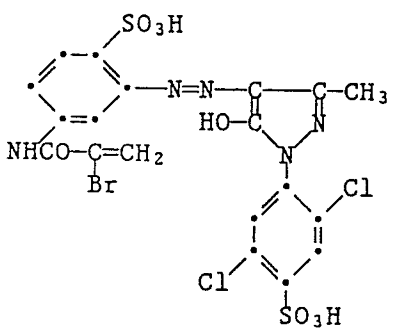

(132)

und 0,40 Teile des roten Farbstoffes der Formel

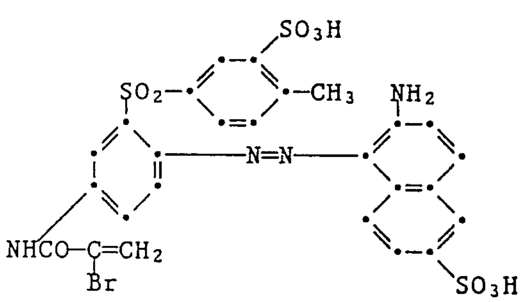

(133)

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser,

Absäuern mit 1 Teil 80%iger Ameisensäure, Zentrifugieren und Trocknen erhält man ein faseregales dunkelbraun gefärbtes Wollgewebe von sehr guter Nass- und Reibechtheit sowie ausgezeichneter Lichtechtheit.

Färbebeispiele 2 bis 11

Verfährt man wie in Färbebeispiel 1 angegeben, verwendet jedoch statt 0,35 Teile des Farbstoffs der Formel (107) gemäss Beispiel 5, 0,30 Teile des gelben Farbstoffs der Formel (132) und 0,40 Teile des roten Farbstoffs der Formel (133) eine Farbstoffmischung, welche die in Tabelle 4 in Spalte 2 in Form der freien Säuren aufgeführten Farbstoffe in den angegebenen Mengen enthält, so wird in den in Tabelle 4 in Spalte 3 angegebenen Farbtönen gefärbtes Wollgewebe erhalten.

Tabelle 4

| Färbebeispiel | Farbstoffmischung | Nuance auf Wolle |
|---|---|---|
| 2 | 0,04 Teile des blauen Farbstoffs der Formel<br>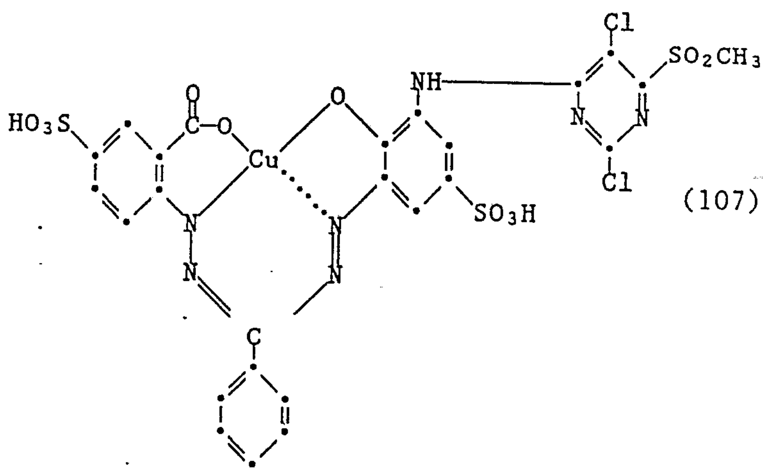 (107)<br>0,1 Teile des orangen Farbstoffs der Formel<br>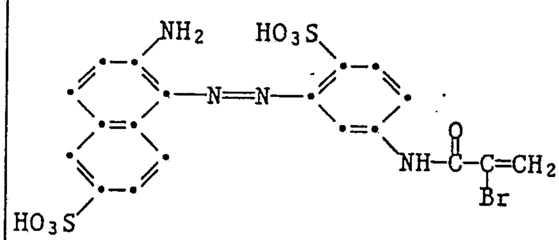 (134)<br>und 0,03 Teile des roten Farbstoffs der Formel<br>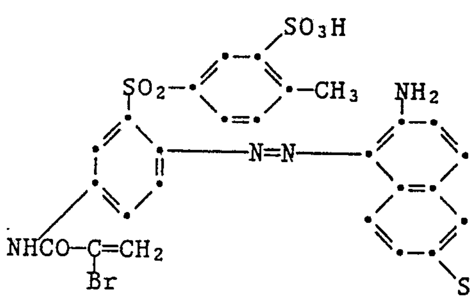 (133)<br>. | beige |

Tabelle 4 (Fortsetzung)

| Färbe-beispiel | Farbstoffmischung | Nuance auf Wolle |
|---|---|---|
| 3 | 0,1 Teile des blauen Farbstoffs der Formel 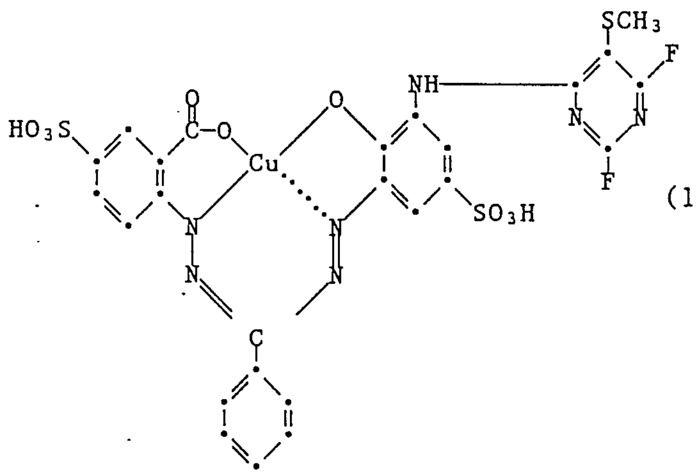 (111), 0,25 Teile des orangen Farbstoffs der Formel (134) und 0,05 Teile des roten Farbstoffs der Formel (133). | hell-braun |
| 4 | 0,8 Teile des blauen Farbstoffs der Formel (107), 1,8 Teile des orangen Farbstoffs der Formel 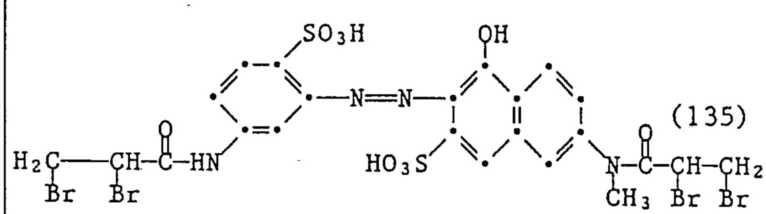 (135) und 0,7 Teile des roten Farbstoffs der Formel (133). | braun |

Tabelle 4 (Fortsetzung)

| Färbe-<br>beispiel | Farbstoffmischung | Nuance auf<br>Wolle |
|---|---|---|
| 5 | 0,9 Teile des blauen Farbstoffs der Formel (111),<br>0,75 Teile des orangen Farbstoffs der Formel (135) und<br>1,35 Teile des roten Farbstoffs der Formel (133). | braun |
| 6 | 0,4 Teile des blauen Farbstoffs der Formel (107),<br>0,9 Teile des gelben Farbstoffs der Formel<br>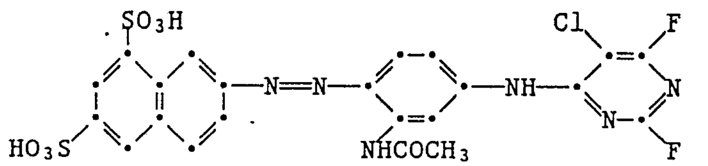 (136),<br>0,06 Teile des orangen Farbstoffs der Formel<br>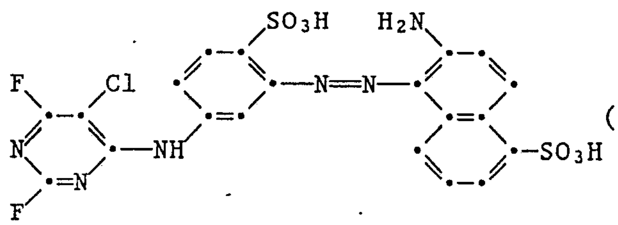 (137) und<br>0,24 Teile des roten Farbstoffs der Formel<br>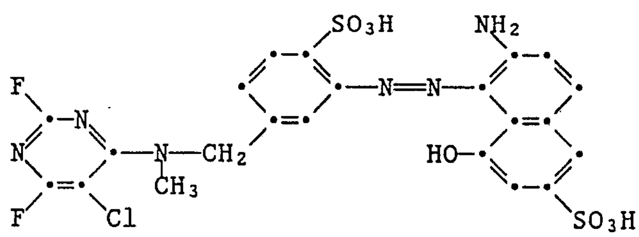 (138). | braun |
| 7 | 1,5 Teile des blauen Farbstoffs der Formel (111),<br>2 Teile des gelben Farbstoffs der Formel (136),<br>0,1 Teile des orangen Farbstoffs der Formel (137) und<br>0,7 Teile des roten Farbstoffs der Formel (138). | dunkel-<br>braun |

Tabelle 4 (Fortsetzung)

| Färbe-<br>beispiel | Farbstoffmischung | Nuance auf<br>Wolle |
|---|---|---|
| 8 | 0,8 Teile des blauen Farbstoffs der Formel (107),<br>1,8 Teile des gelben Farbstoffs der Formel<br>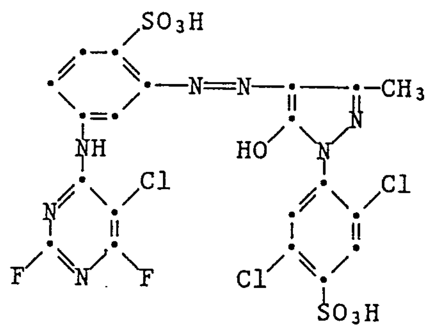 (139),<br>0,15 Teile des orangen Farbstoffs der Formel (137) und<br>0,55 Teile des roten Farbstoffs der Formel (138). | braun |
| 9 | 0,9 Teile des blauen Farbstoffs der Formel (111),<br>0,75 Teile des gelben Farbstoffs der Formel (139),<br>0,3 Teile des orangen Farbstoffs der Formel (137) und<br>1,05 Teile des roten Farbstoffs der Formel (138). | braun |
| 10 | 0,04 Teile des blauen Farbstoffs der Formel (111),<br>0,1 Teile des gelben Farbstoffs der Formel<br>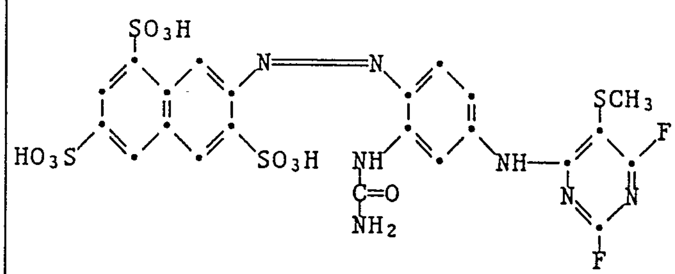 (140) und<br>0,03 Teile des roten Farbstoffs der Formel (133). | beige |
| 11 | 1,5 Teile des blauen Farbstoffs der Formel (107)<br>2 Teile des gelben Farbstoffs der Formel<br>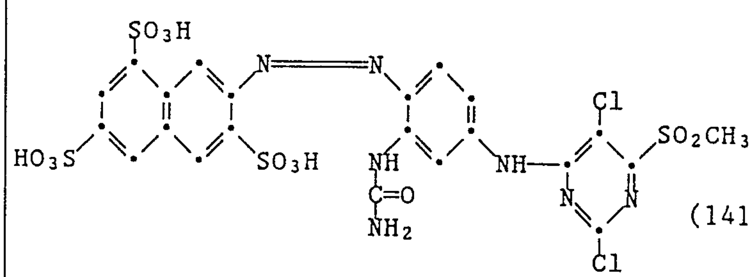 (141) und<br>0,8 Teile des roten Farbstoffs der Formel (133). | dunkel-<br>braun |

Färbebeispiele 12 bis 17

Verfährt man wie in Färbebeispiel 1 angegeben, verwendet jedoch statt 0,35 Teile des gemäss Beispiel 5 erhaltenen Farbstoffes eine äquimolare Menge eines der gemäss den Beispielen 7 bis 10, 18 und 20 erhaltenen Farbstoffe, so erhält man ein dunkelbraun gefärbtes Wollgewebe.

Färbebeispiel 18

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 Hexadecylamin, 25 % Octadecylamin und 45 % Octadecenylamin und 7 Mol Aethylenoxid) sowie 4 Teile Ammoniumsulfat gelöst.

0,5 Teile des gemäss Beispiel 7 erhaltenen Farbstoffes und 0,09 Teile des gelben Farbstoffes der Formel

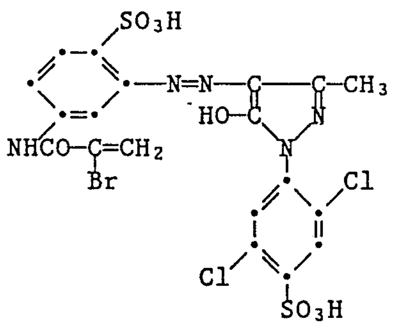

(132)

und 0,2 Teile des roten Farbstoffes der Formel

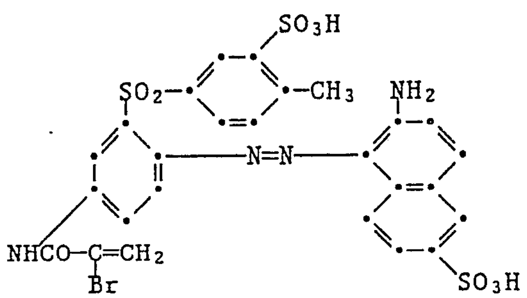

(133)

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minu ten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein grau gefärbtes Färbegut von sehr guter Nassechtheit sowie ausgezeichneter Lichtechtheit.

**Patentansprüche**

1. Verfahren zum Trichromie-Färben oder -Bedrucken von natürlichen und synthetischen Polyamidfasermaterialien mit Reaktivfarbstoffmischungen, dadurch gekennzeichnet, dass man blaufärbende Reaktivfarbstoffe der Formel

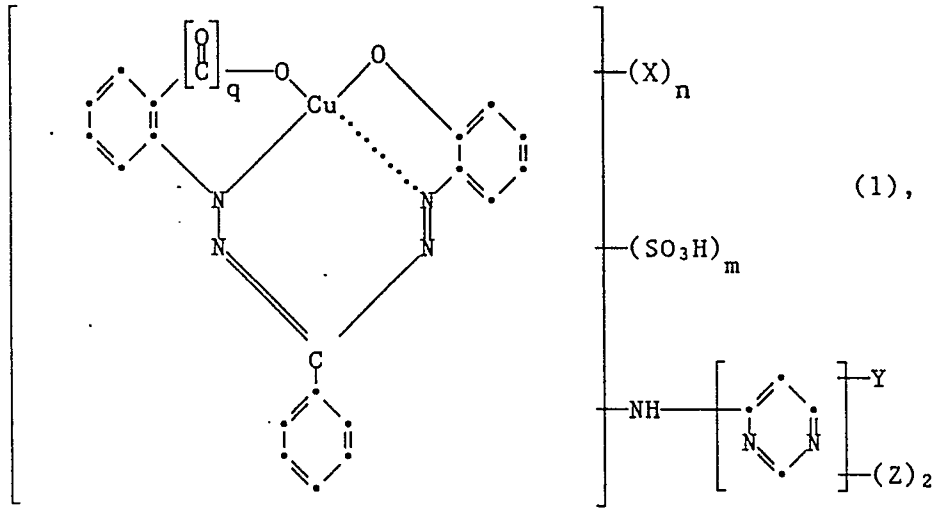

(1),

worin X Halogen $C_1$-$C_4$-Alkyl, $C_1$-$C_4$-Alkoxy, Cyan oder Nitro, n die Zahl 0, 1 oder 2, q die Zahl 0 oder 1, m die Zahl 1, 2 oder 3, Z Halogen und Y eine CN-, CHO- oder $S(O)_pR$-Gruppe ist, wobei p die Zahl 0, 1 oder 2 und R gegebenenfalls substituiertes $C_1$-$C_8$-Alkyl oder Phenyl ist, zusammen mit sulfogruppenhaltigen gelb- oder orangefärbenden Reaktivfarbstoffen und sulfogruppenhaltigen rotfärbenden Reaktivfarbstoffen verwendet.

2. Verfahren gemäss Anspruch 1, dadurch gekennzeichnet, dass q die Zahl 1, n die Zahl 0 und m die Zahl 2 bedeutet.

3. Verfahren gemäss einem der Ansprüche 1 und 2, dadurch gekennzeichnet, dass Z Fluor oder Chlor bedeutet.

4. Verfahren gemäss einem der Ansprüche 1 bis 3, dadurch gekennzeichnet, dass Y eine $S(O)_pR$-Gruppe ist, worin R gegebenenfalls substituiertes $C_1$-$C_4$-Alkyl oder Phenyl und p die Zahl 0, 1 oder 2 ist.

5. Verfahren gemäss Anspruch 1, dadurch gekennzeichnet, dass man blaufärbende Reaktivfarbstoffe der Formel

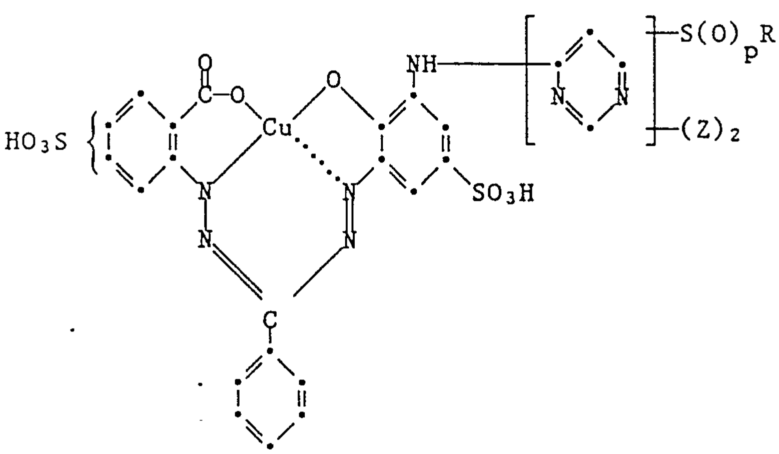

(2)

verwendet, worin Z Fluor oder Chlor, p die Zahl 0 oder 2 und R $C_1$-$C_4$-Alkyl ist.

6. Verfahren gemäss Anspruch 1, dadurch gekennzeichnet, dass man blaufärbende Reaktivfarbstoffe der Formel

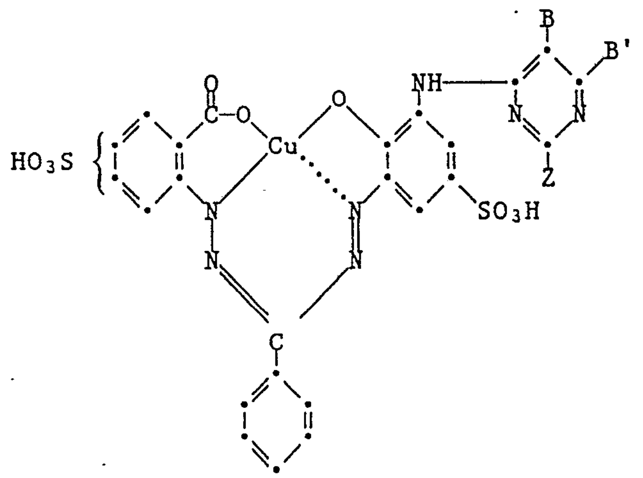

(3)

verwendet, worin einer der Reste B oder B′ $-S(O)_pCH_3$ ist und der andere der Reste B oder B′ Fluor oder Chlor, Z Fluor oder Chlor, p die Zahl 0 oder 2 ist, B und Z oder B′ und Z jeweils Chlor oder Fluor sind.

7. Verfahren gemäss Anspruch 1, dadurch gekennzeichnet, dass man blaufärbende Reaktivfarbstoffe der Formel

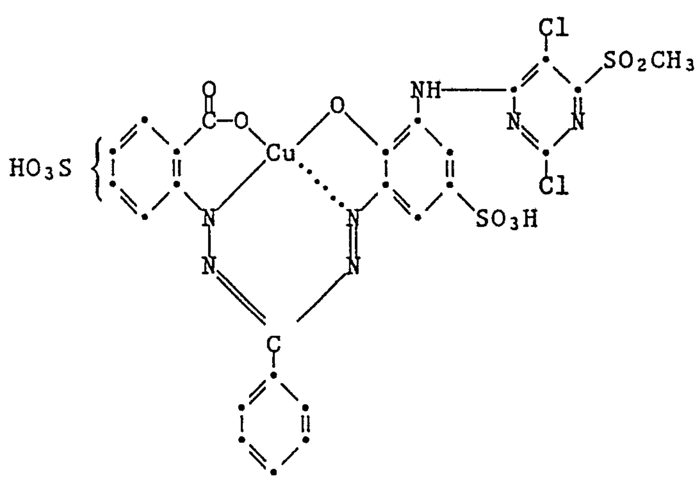

(4)

verwendet.

8. Verfahren gemäss Anspruch 1, dadurch gekennzeichnet, dass man blaufärbende Reaktivfarbstoffe der Formel

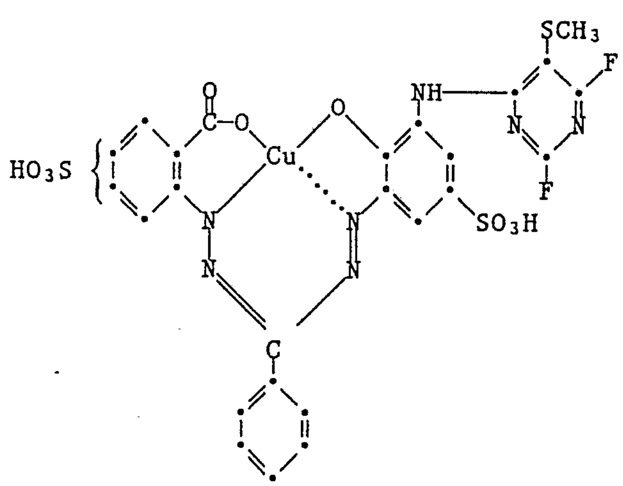

(5)

verwendet.

9. Verfahren gemäss einem der Ansprüche 1 bis 8, dadurch gekennzeichnet, dass man als gelb- oder orange- und rotfärbende sulfogruppenhaltige Reaktivfarbstoffe Azofarbstoffe verwendet, die als faserreaktive Gruppe eine Halogentriazin-oder Halogenpyrimidingruppe oder eine Reaktivgruppe der aliphatischen Reihe enthalten.

10. Verfahren gemäss einem der Ansprüche 1 bis 9, dadurch gekennzeichnet, dass man als gelb- oder orange- und rotfärbenden sulfogruppenhaltigen Reaktivfarbstoffe Azofarbstoffe verwendet, die als faserreaktive Gruppe Difluorchlorpyrimidinyl, insbesondere 2,4-Difluor-5-chlorpyrimidin-6-yl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, enthalten.

11. Verfahren gemäss einem der Ansprüche 1 bis 10, dadurch gekennzeichnet, dass man als gelb- oder orangefärbende sulfogruppenhaltige Reaktivfarbstoffe mindestens einen Farbstoff der Formeln

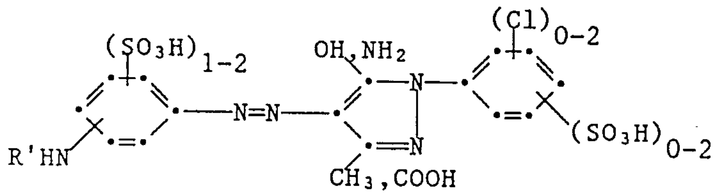
(6)

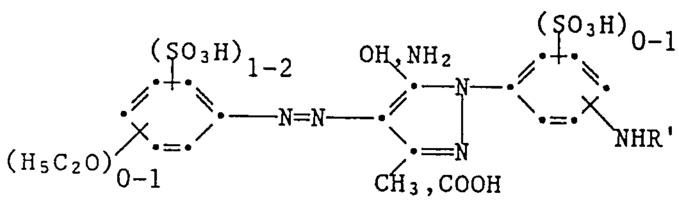
(7)

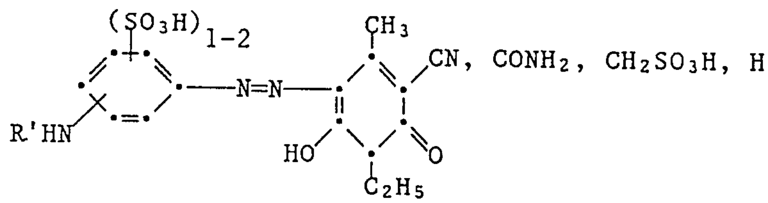
(8)

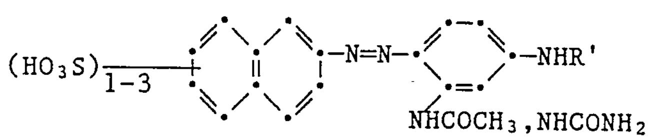
(9)

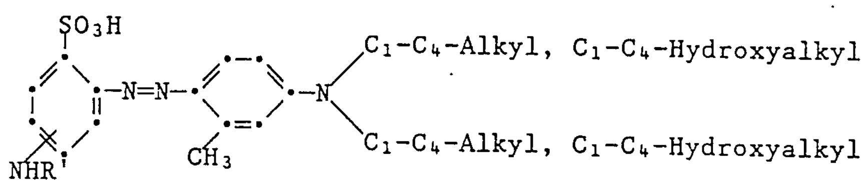
(10)

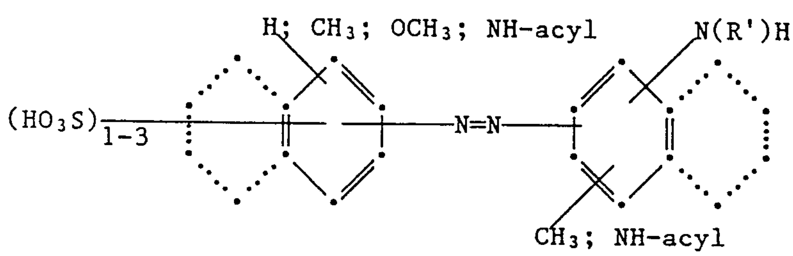
(11)

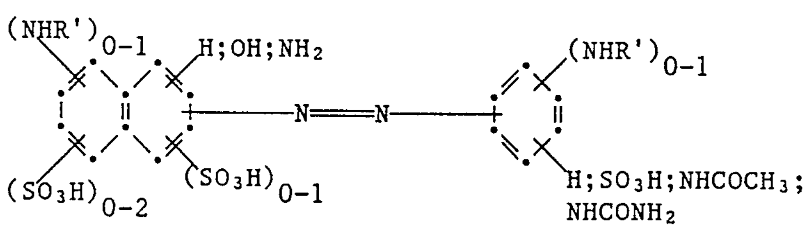
(12)

und als rotfärbende sulfogruppenhaltige Reaktivfarbstoffe mindestens einen Farbstoff der Formeln

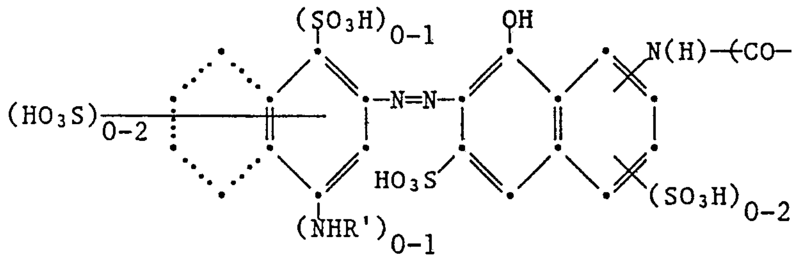

(13)

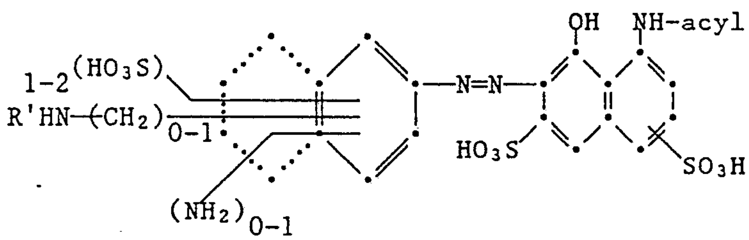

(14)

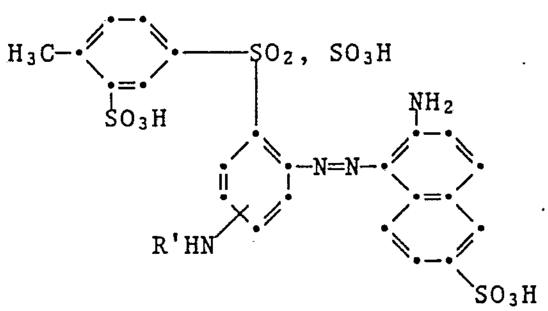

(15)

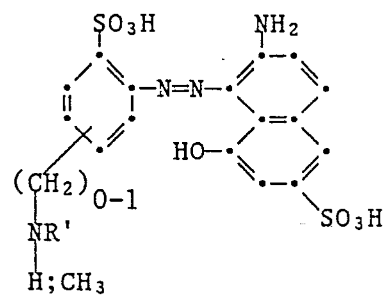

(16)

verwendet, worin acyl Acetyl oder gegebenenfalls substituiertes Benzoyl ist, R′ Difluorchlorpyrimidinyl, insbesondere 2,4-Difluor-5-chlorpyrimidin-6-yl, oder α,β-Dihalogenpropionyl, insbesondere α,β-Dibrom propionyl, oder α-Halogenacryloyl, insbesondere α-Bromacryloyl, bedeutet und worin die durch Punkte angedeuteten kondensierten Ringe für alternativ mögliche Naphthalinsysteme stehen.

12. Verfahren gemäss einem der Ansprüche 1 bis 8, dadurch gekennzeichnet, dass man als gelb- oder orangefärbenden Reaktivfarbstoff den Farbstoff der Formel

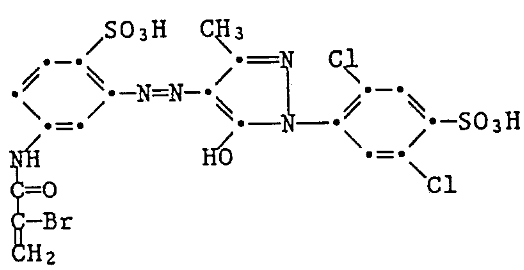

(18)

verwendet. 13. Verfahren gemäss einem der Ansprüche 1 bis 8, dadurch gekennzeichnet, dass man als rotfärbenden Reaktivfarbstoff den Farbstoff der Formel

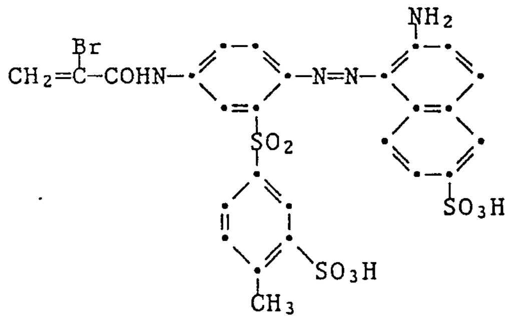

(20)

verwendet.

14. Verfahren gemäss Anspruch 7, dadurch gekennzeichnet, dass man den gelb- oder orangefärbenden Reaktivfarbstoff der Formel (18)

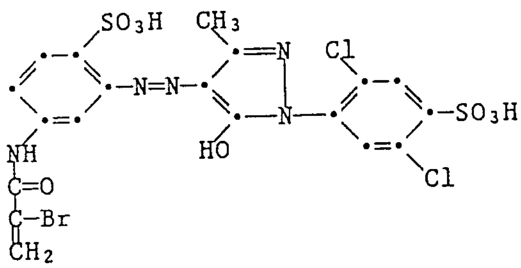

(18)

zusammen mit dem rotfärbenden Reaktivfarbstoff der Formel (20)

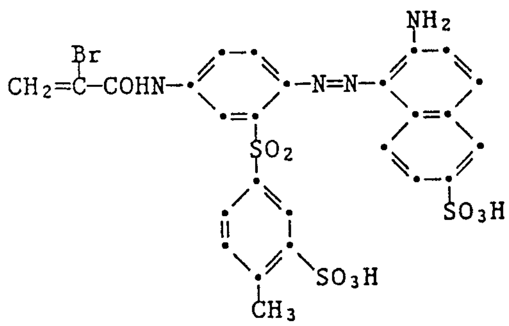

(20)

und einem blaufärbenden Reaktivfarbstoff der Formel (4) verwendet.

15. Verfahren gemäss Anspruch 8, dadurch gekennzeichnet, dass man den gelb- oder orangefärbenden Reaktivfarbstoff der Formel (18)

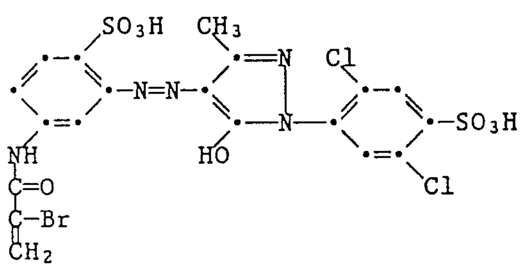

(18)

zusammen mit dem rotfärbenden Reaktivfarbstoff der Formel (20)

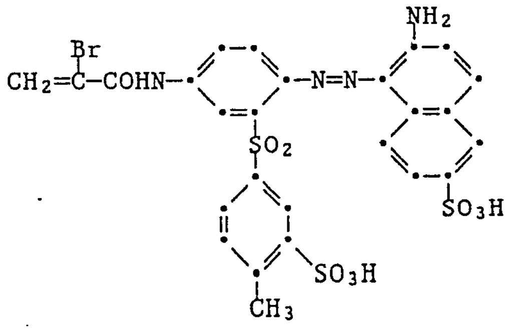

(20)

und einem blaufärbenden Reaktivfarbstoff der Formel (5) verwendet.

16. Verfahren zum Trichromie-Färben oder -Bedrucken von natürlichen oder synthetischen Polyamidfasermaterialien gemäss einem der Ansprüche 1 bis 15, dadurch gekennzeichnet, dass man diese Fasermaterialien mit einer Färbeflotte oder Druckpaste behandelt, welche gelb- oder orange-, rot-und blaufärbende Reaktivfarbstoffe enthält.

17. Verfahren gemäss einem der Ansprüche 1 bis 16, dadurch gekennzeichnet, dass man als Fasermaterial natürliches oder synthetisches Polyamidmaterial, insbesondere Wolle, verwendet.

18. Wässrige Färbeflotte oder Druckpaste, dadurch gekennzeichnet, dass sie gelb- oder orange-, rot- und blaufärbende Reaktivfar'ostoffe sowie gegebenenfalls weitere Zusätze enthält.

19. Das nach dem Verfahren gemäss Anspruch 16 bzw. unter Verwendung der Färbeflotte oder Druckpaste gemäss Anspruch 18 gefärbte oder bedruckte natürliche oder synthetische Polyamidfasermaterial.

20. Das gemäss Anspruch 19 gefärbte oder bedruckte Polyamidfasermaterial, insbesondere Wolle.

Europäisches Patentamt

# EUROPÄISCHER RECHERCHENBERICHT

Nummer der Anmeldung

EP 89 81 0610

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 304 926 (CIBA-GEIGY)<br>* Seite 2, Zeilen 21-37; Seite 12, Absatz d; Beispiele 7,16,30 *<br>--- | 1-3,7 | D 06 P 3/10<br>D 06 P 1/38<br>C 09 B 62/20 |
| A | US-A-4 325 869 (K. SEITZ et al.)<br>* Spalte 1, Zeilen 1-68; Spalte 2, Zeilen 1-19; Spalte 15, Zeilen 1-45; Spalte 26, Zeilen 15-22 *<br>--- | 1-6 | |
| A | EP-A-0 181 292 (CIBA-GEIGY)<br>* Ansprüche 1,2,5 *<br>----- | 1 | |

RECHERCHIERTE SACHGEBIETE (Int. Cl.5)

D 06 P
C 09 B

Der vorliegende Recherchenbericht wurde für alle Patentansprüche erstellt

| Recherchenort | Abschlußdatum der Recherche | Prüfer |
|---|---|---|
| DEN HAAG | 29-11-1989 | LUDI M.M.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)